# EUROPÄISCHE PATENTSCHRIFT

(11) **EP 3 607 635 B1**
(45) Veröffentlichungstag und Bekanntmachung des Hinweises auf die Patenterteilung: **19.10.2022**
(21) Anmeldenummer: 18712504.2
(22) Anmeldetag: 20.03.2018
(51) Int. Cl.: H02J 50/10, H01F 41/00

(54) **VERFAHREN ZUM HERSTELLEN EINES SYSTEMS ZUR INDUKTIVEN ÜBERTRAGUNG VON ENERGIE AN EIN MOBILTEIL UND VORRICHTUNG ZUR DURCHFÜHRUNG DES VERFAHRENS**
METHOD FOR PRODUCING A SYSTEM FOR INDUCTIVELY TRANSMITTING ENERGY TO A MOBILE PART AND DEVICE FOR CARRYING OUT THE METHOD
PROCÉDÉ SERVANT À FABRIQUER UN SYSTÈME SERVANT À TRANSMETTRE PAR INDUCTION DE L'ÉNERGIE À UNE PARTIE MOBILE ET DISPOSITIF SERVANT À METTRE EN OEUVRE LE PROCÉDÉ

(30) Priorität: 07.04.2017 DE 102017003498
(43) Veröffentlichungstag der Anmeldung: 12.02.2020
(73) Patentinhaber: SEW-EURODRIVE GmbH & Co. KG, 76646 Bruchsal (DE)
(72) Erfinder: SODER, Johann, 76707 Hambrücken (DE); JAHN, Nils-Malte, 69124 Heidelberg (DE)
(86) Internationale Anmeldenummer: PCT/EP2018/025064
(87) Internationale Veröffentlichungsnummer: WO 2018/184730

(56) Entgegenhaltungen:
- WO-A1-2011/154993
- DE-A1- 3 700 488
- DE-A1-102013 007 850
- FR-A1- 2 775 383
- US-A1- 2016 308 391

## Beschreibung

Die Erfindung betrifft ein Verfahren zum Herstellen eines Systems zur induktiven Übertragung von Energie an ein Mobilteil.

Es ist allgemein bekannt, dass Energie induktiv von einem Primärteil an eine Sekundärwicklung übertragbar ist.

Aus der FR 2 775 383 A1 ist als nächstliegender Stand der Technik ein Transformator bekannt, dessen Primärteil stationär und dessen Sekundärteil drehbar angeordnet ist.

Aus der WO 2011 / 154993 A1 ist ebenfalls ein Transformator bekannt.

Aus der DE 10 2013 007 850 A1 ist eine Transformatoranordnung bekannt.

Aus der US 2016 / 308391 A1 ist wegebewegbares induktives Leistungsübertragungselement bekannt.

Der Erfindung liegt daher die Aufgabe zugrunde, die Sicherheit bei einem System zur induktiven Beladung weiterzubilden.

Erfindungsgemäß wird die Aufgabe bei dem Verfahren nach den in Anspruch 1 angegebenen Merkmalen gelöst.

Wichtige Merkmale der Erfindung bei dem Verfahren zum Herstellen eines Systems zur induktiven Übertragung von Energie an ein Mobilteil, sind, dass
in einem ersten Verfahrensschritt in einen Boden eine Stufenbohrung eingebracht wird,
wobei in einem nachfolgenden zweiten Verfahrensschritt ein Dichtkörper in die Stufenbohrung eingebracht wird,
wobei in einem nachfolgenden dritten Verfahrensschritt ein Ringrahmen mittels einer an der Oberfläche des Bodens abgestützten Ausrichteinheit in der Stufenbohrung gehalten wird, insbesondere wobei die Oberkante des Ringrahmens auf die Höhe des Bodens oder auf die Oberfläche eines auf dem Boden angebrachten Bodenbelags ausgerichtet ist, insbesondere also die Oberkante auf gleicher Höhenposition gebracht wird wie die Oberfläche des Bodens oder des Bodenbelags,
wobei der Ringrahmen vom Boden beabstandet ist, so dass ein Spaltbereich zwischen Ringrahmen und Boden vorhanden ist,
wobei in einem nachfolgenden vierten Verfahrensschritt Vergussmasse in den Spaltbereich gefüllt wird,
wobei in einem nachfolgenden fünften Verfahrensschritt die Ausrichteinheit entfernt wird,
wobei in einem nachfolgenden sechsten Verfahrensschritt ein Primärteil im Ringrahmen aufgenommen wird, insbesondere schraubverbunden wird.

Von Vorteil ist dabei, dass eine Ausrichtung des Ringrahmens an der Oberfläche des Bodens, insbesondere an der genauen Höhe des Bodenbelags auf dem Boden, ausführbar ist. Somit ist das Primärteil mit dem Ringrahmen einfach verbindbar und es ist das Entstehen einer Stolperkante verhindert. Diese Barrierefreiheit verringert also die Unfallgefahr und verbessert somit die Sicherheit.

Bei einer vorteilhaften Ausgestaltung liegt der Dichtkörper an der Stufenbohrung, insbesondere an einem unterhalb der Stufe der Stufenbohrung angeordneten Bereich der Stufenbohrung an, insbesondere ist angedrückt, und an dem Ringrahmen, insbesondere an der Innenwand des ringförmigen Ringrahmens. Von Vorteil ist dabei, dass mittels des Dichtkörpers verhindert wird, dass Vergussmasse in den für das Primärteil und/oder für seine Zuleitung vorgesehenen Raumbereich der Stufenbohrung einströmt. Entweder ist der Dichtkörper aus einem elastischen Kunststoff-Material, wie Schaumstoff, gefertigt und weist ein mittig angeordnetes Loch auf oder der Dichtkörper ist aufblasbar ausgeführt, so dass er sich beim Aufblasen an den unteren Bereich der Stufenbohrung und an die Innenwandung des Ringrahmens anlegt. In jedem Fall ist der für die Vergussmasse vorgesehene Spaltbereich zwischen Ringrahmen und Boden zumindest auch begrenzt durch den Dichtkörper.

Bei einer vorteilhaften Ausgestaltung weist das Primärteil eine Wicklung auf,
insbesondere wobei eine elektrische Zuleitung für die Wicklung in einem Leerrohr angeordnet ist, welches in den unterhalb der Stufe der Stufenbohrung angeordneten Bereich mündet. Von Vorteil ist dabei, dass die Zuleitung zur Zuleitung eines mittelfrequenten Wechselstroms gut geschützt zum Ladepunkt, also auch zum Primärteil, anordenbar ist.

Bei einer vorteilhaften Ausgestaltung wird die Ausrichteinheit an der Oberfläche des Bodenbelags des Bodens ausgerichtet. Von Vorteil ist dabei, dass ein Ausrichten an der Oberfläche und somit an dem Bodenbelag vorhandenen Bodenniveau ermöglicht ist.

Bei einer vorteilhaften Ausgestaltung ist der Ringrahmen oberhalb der Stufe der Stufenbohrung angeordnet. Von Vorteil ist dabei, dass das Primärteil präzise einbaubar ist.

Wichtige Merkmale **des nach einem vorgenannten Verfahren hergestellten Systems** sind, dass die Vorrichtung ein in einer in einem Boden eingebrachten Stufenbohrung angeordnetes Primärteil aufweist,
wobei die Ausrichteinheit eine Scheibe aufweist, an welcher radial sich erstreckende Arme angeordnet sind, an welchen jeweils eine Einstellschraube angeordnet ist.
und/oder wobei
ein Ringrahmen in der in den Boden eingebrachten Stufenbohrung mittels Vergussmasse gehalten ist, insbesondere stoffschlüssig und/oder formschlüssig,
wobei das Primärteil mit dem Ringrahmen verbunden ist, insbesondere schraubverbunden ist.

Von Vorteil ist dabei, dass die Vorrichtung einfach herstellbar ist und das Primärteil präzise einbaubar ist, insbesondere also die Einbauhöhe präzise abgestimmt ist auf die Oberfläche des Bodens, insbesondere des Bodenbelags.

Bei einer vorteilhaften Ausgestaltung weist das Primärteil ein Aufnahmeteil auf, dessen Oberseite von einem Deckelteil abgedeckt ist, welches an seiner dem Aufnahmeteil zugewandten Seite eine spiralförmig verlaufende Nut aufweist, in welcher die Wicklung aufgenommen ist, insbesondere wobei die Wicklung als Flachwicklung ausgeführt ist,
wobei auf der dem Aufnahmeteil zugewandten Seite der Wicklung eine Ferritschicht angeordnet ist,
insbesondere wobei die Ferritschicht aus quaderförmigen Ferritteilen zusammengesetzt ist. Von Vorteil ist dabei, dass das Primärteil rund ausführbar ist und somit an die Stufenbohrung angepasst ist. Trotz der runden Form ist aber eine Wicklung aufnehmbar, die als rechteckspiralförmige Wicklung, also nicht isotrop in der Verfahrebene des Mobilteils, ausführbar ist. Somit ist ein hoher induktiver Kopplungsgrad zwischen Primärteil und Sekundärwicklung erreichbar, da die ebenfalls nicht isotrope Sekundärwicklung besonders vorteilhaft ist zur induktiven Beladung aus einem entlang des Fahrwegs langgestreckt verlegten Primärleiters. Die Beladung ist also nicht nur von erfindungsgemäßen Ladepunkten aus, sondern auch von langgestreckt verlegten Primärleitern aus ermöglicht. Die Wicklung des Primärteils des Ladepunktes und die Sekundärwicklung des Mobilteils weisen also jeweils eine Vorzugsrichtung auf.

Bei einem System, bei welchem das Beladen jedoch nur an den Ladepunkten ausgeführt werden soll, ist die Wicklung im Primärteil als kreisspiralförmige Flachwicklung ausführbar, also ohne Vorzugsrichtung. Somit ist eine Beladung des Mobilteils während des Ausführung einer Verdrehung des Mobilteils über dem Ladepunkt ermöglicht. Hierzu weist das Mobilteil einen omnidirektionalen Antrieb auf, kann sich also auf der Stelle drehen. Die Drehachse ist dabei vorzugsweise koaxial zur Achse der Stufenbohrung ausgerichtet.

Bei einer vorteilhaften Ausgestaltung ist an der vom Deckelteil abgewandten Seite des Aufnahmeteils ein Unterteil mit dem Aufnahmeteil verbunden,
wobei zwischen Aufnahmeteil und Unterteil ein in Umfangsrichtung umlaufender, insbesondere ringförmiger Raumbereich ausgebildet ist, in welchem eine mit zumindest einer Kondensatoranordnung bestückte Leiterplatte angeordnet ist. Von Vorteil ist dabei, dass im Raumbereich eine elektrische Kompensation anordenbar ist.

Bei einer vorteilhaften Ausgestaltung ist das Unterteil mit dem Aufnahmeteil schraubverbunden,
wobei das Deckelteil mittels durch das Aufnahmeteil durchgehender Schrauben mit dem Ringrahmen schraubverbunden ist. Von Vorteil ist dabei, dass eine einfache Verbindung ausführbar ist.

Bei einer vorteilhaften Ausgestaltung ist zwischen Aufnahmeteil und Unterteil ein vom in Umfangsrichtung umlaufenden, insbesondere ringförmigen, Raumbereich beabstandeter, insbesondere auf kleinerem Radialabstand zur Mittelachse der Stufenbohrung angeordneter, weiterer Raumbereich ausgebildet. Von Vorteil ist dabei, dass ein Leuchtmittel in diesem weiteren Raumbereich vorsehbar ist, welches mittig, also im Bereich der Achse der Stufenbohrung, angeordnet ist.

Bei einer vorteilhaften Ausgestaltung ist ein steuerbares Leuchtmittel, insbesondere LED, im weiteren Raumbereich angeordnet,
wobei das Aufnahmeteil eine insbesondere zum Leuchtmittel, durchgehende Bohrung aufweist, die entweder frei gehalten ist oder mit einem transparenten Material befüllt ist,
wobei das Deckelteil aus einem transparenten Material gefertigt ist. Von Vorteil ist dabei, dass
Informationen optisch anzeigbar sind, beispielsweise der Betriebszustand des Primärteils.

Bei einer vorteilhaften Ausgestaltung ist die Kondensatoranordnung mit der Wicklung in Reihe oder parallelgeschaltet und derart dimensioniert, dass die Resonanzfrequenz des so gebildeten Schwingkreises im Wesentlichen der Frequenz des in den Schwingkreis oder die Wicklung eingeprägten Wechselstroms entspricht. Von Vorteil ist dabei, dass ein hoher Wirkungsgrad erreichbar ist.

Bei einer vorteilhaften Ausgestaltung ist an der Unterseite des Unterteils eine Kabelverschraubung angeordnet, zu welcher die Zuleitung geführt ist. Von Vorteil ist dabei, dass ein geschütztes Zuführen der Zuleitung ausführbar ist.

Bei einer vorteilhaften Ausgestaltung weisen das Aufnahmeteil, das Deckelteil und das Unterteil einen kreisförmigen Außenrandbereich auf
und/oder einen maximalen Radialabstand, welcher unabhängig vom Umfangswinkel ist. Von Vorteil ist dabei, dass das Primärteil in den ringrahmen aufnehmbar ist, welcher in der Stufenbohrung angeordnet ist, die als Rundbohrung ausgeführt ist. Somit ist die Herstellung einfach.

Bei einer vorteilhaften Ausgestaltung weist die Wicklung eine Vorzugsrichtung auf, die parallel zur Verfahrebene des Mobilteils ausgerichtet ist,
und/oder der maximale Radialabstand der Wicklung weist abhängig vom Umfangswinkel verschiedenen Werte auf. Von Vorteil ist dabei, dass zwar eine optimale Beladung des Mobilteils nur in einer Ausrichtung des Mobilteils ermöglicht ist, bei welcher die Vorzugsrichtung der Sekundärwicklung des Mobilteils parallel gerichtet ist zur Vorzugsrichtung der Wicklung des Primärteils. Aber somit ist auch eine Beladung während der Fahrt entlang eines langgestreckt verlegten Primärleiters ermöglicht.

Bei einer alternativen Ausführung der Wicklung ohne Vorzugsrichtung, also als kreisförmige Flachwicklung, die koaxial zur Achse der Stufenbohrung ausgerichtet ist, ist eine Beladung während der Drehbewegung des Mobilteils ermöglicht, ohne dass die induktive Kopplungsstärke zwischen Wicklung und Sekundärwicklung schwanken würde. Die Drehachse muss dabei koaxial zur Achse der Stufenbohrung ausgerichtet sein. Vorzugsweise weist das Mobilteil hierzu omnidirektionale Räder auf oder einen Panzerantrieb. Somit ist die Drehung auf der Stelle ausführbar.

Wichtige Merkmale bei dem System zur kontaktlosen Übertragung von Energie von einem am Boden angeordneten Primärteil an ein auf dem Boden bewegbares Mobilteil, **wobei das System nach einem vorgenannten Verfahren hergestellt ist.,** sind, dass ein Ringrahmen in einer in den Boden eingebrachten Stufenbohrung mittels Vergussmasse gehalten ist, insbesondere stoffschlüssig und/oder formschlüssig,
das Primärteil mit dem Ringrahmen verbunden ist, insbesondere schraubverbunden ist.

Von Vorteil ist dabei, dass ein präzises Aufnehmen des Primärteils im Ringrahmen in einfacher Weise ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Schrägansicht einer angeschnittenen explodierten Darstellung eines Herstellschritts zur Herstellung einer Primäreinheit, insbesondere Ladepunkt, eines Systems zur induktiven Übertragung von Energie an ein Mobilteil dargestellt, wobei ein Ringrahmen 3 am Rand einer Stufenbohrung mittels einer Ausrichteinheit ausgerichtet wird.
In der Figur 2 ist eine zugehörige Draufsicht auf den Zusammenbau dargestellt.
In der Figur 3 ist eine zugehörige Schnittansicht dargestellt.
In der Figur 4 ist eine Schrägansicht durch eine angeschnittene explodierte Darstellung des Zusammenbaus gezeigt.
In der Figur 5 ist eine alternative Methode zum Ausrichten des Ringrahmens 3 gezeigt.
In der Figur 6 ist ein Querschnitt durch die Primäreinheit dargestellt.

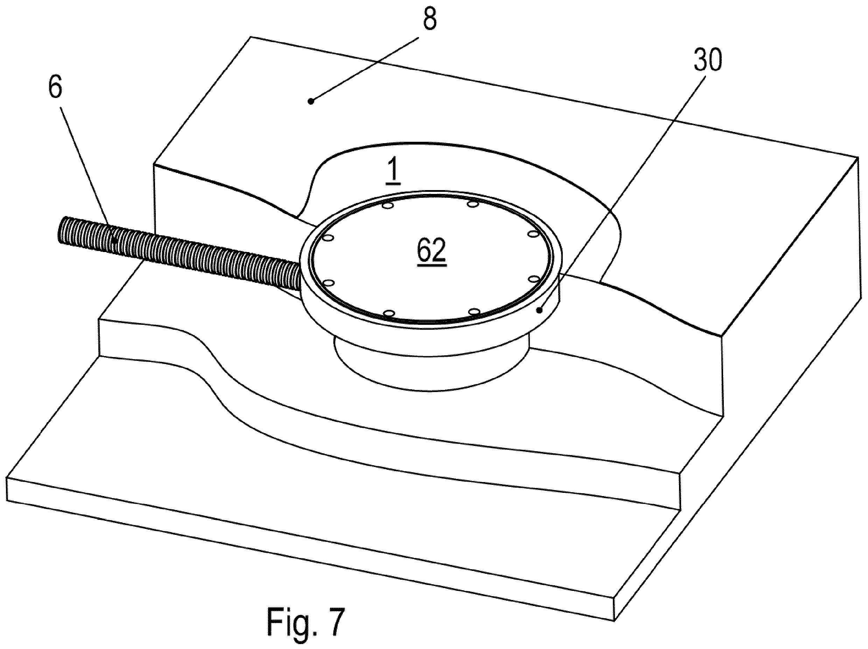

In der Figur 7 ist eine Schrägansicht auf die angeschnitten dargestellte in der Stufenbohrung angeordnete Primäreinheit gezeigt.
In der Figur 8 ist eine Schrägansicht auf die angeschnitten dargestellte Primäreinheit gezeigt.
In der Figur 9 ist eine explodierte Darstellung der Primäreinheit gezeigt.
In der Figur 10 ist die explodierte Darstellung der Primäreinheit aus einem anderen Blickwinkel gezeigt.
In der Figur 11 ist der Bereich der Wicklung 61 der Primäreinheit explodiert dargestellt, wobei die Blickrichtung von unten herkommend gewählt ist.

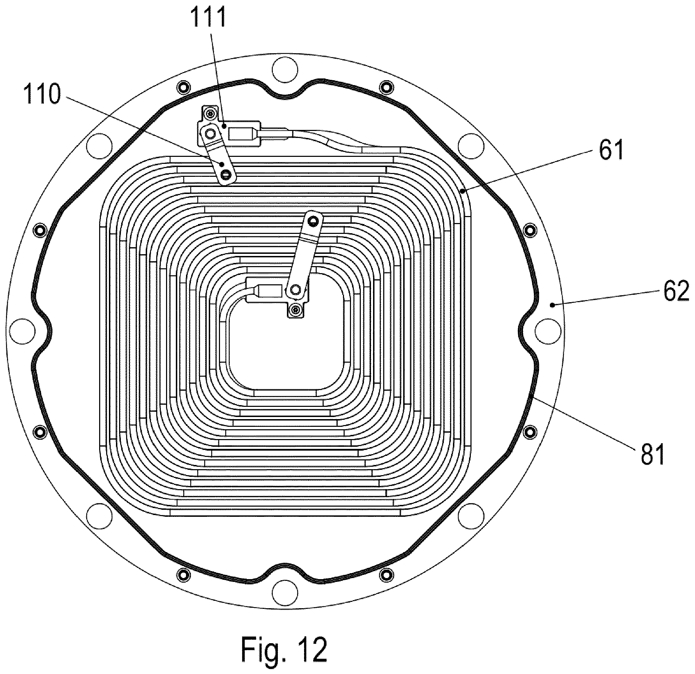

In der Figur 12 ist eine Draufsicht von unten auf diesen Bereich bei Zusammenbau der Teile dargestellt.

Wie in den Figuren gezeigt, wird eine Primäreinheit im Boden angeordnet, wobei die Primäreinheit eine Wicklung 61 aufweist, in welche ein mittelfrequenter Strom eingeprägt wird. Somit ist ein über der Primäreinheit, insbesondere also Ladepunkt, eingeparktes oder sich drehendes Mobilteil induktiv mit Energie beladbar. Hierzu weist das Mobilteil an seiner Unterseite eine Sekundärwicklung auf, der eine derartige Kapazität parallel oder in Reihe zugeschaltet ist, dass die Resonanzfrequenz des so gebildeten Schwingkreises der Frequenz des in die Wicklung 61 eingeprägten Stromes entspricht.

Zur Herstellung des Ladepunktes wird zunächst eine Kernbohrung im Bodenmaterial 1 insbesondere Beton, ausgeführt. Der Boden weist an seiner Oberseite einen Bodenbelag 8 auf und ist vom Mobilteil befahrbar.

Um den Ladepunkt barrierefrei zu gestalten, also keine Stolperfalle auszubilden, wird zunächst ein Ringrahmen 3 mit einer Ausrichteinheit ausgerichtet und gehalten. Dabei ist die Ausrichteinheit abgestützt am Rand der Bohrung,
Die Ausrichteinheit weist eine Scheibe 4 auf, an deren Oberseite Arme 5 sich jeweils in radiale Richtung erstrecken. Mittels axial orientierter Einstellschrauben 20 wird die Ausrichteinheit am Randbereich der Bohrung abgestützt, also am Boden 1 oder am auf dem Boden 1 aufgebrachten Bodenbelag 8.

Bei Abstützung am Boden 1 ist mittels der Einstellschrauben 20 die Dicke des Bodenbelags berücksichtigbar, so dass die Arme 5 in der vorgesehenen Höhe über dem Boden angeordnet sind. Denn nachträglich ist auch im Randbereich der Bohrung der Bodenbelag aufbringbar, falls er anfangs noch nicht vorhanden war oder durch das Herstellen der Stufenbohrung zerstört und/oder zumindest teilweise entfernt wurde.

Somit ist mittels der durch die Arme 5 durchgeschraubten Einstellschrauben 20 die von den Armen 5 gehaltene Scheibe 4 in der vorgesehenen Position anordenbar.

Die in den Boden 1 eingebrachte Stufenbohrung weist eine Stufe 7 auf, wobei in den unterhalb der Stufe 7 angeordneten Bereich der Stufenbohrung ein Leerrohr 6 mündet, welches im Boden 1 verlegt ist.

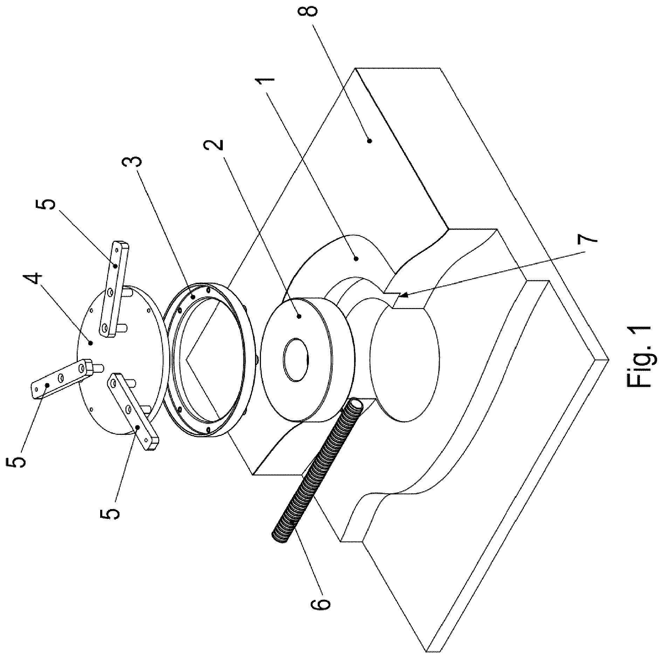

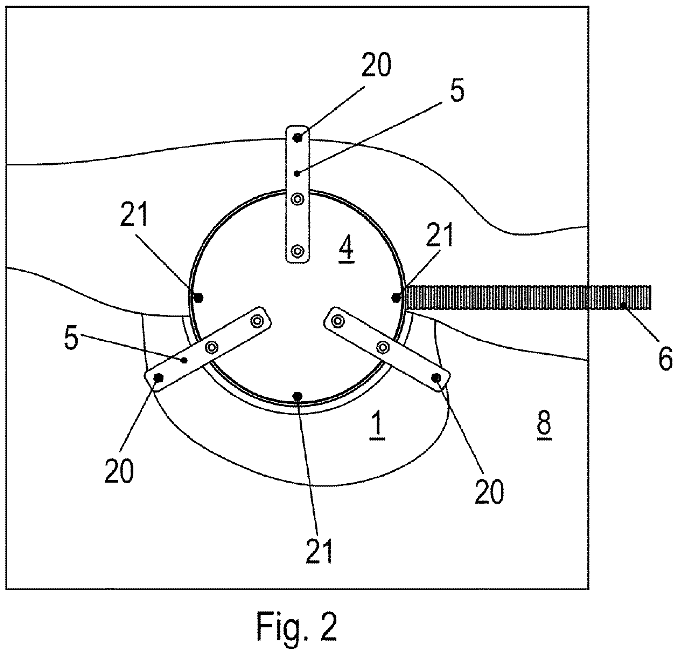

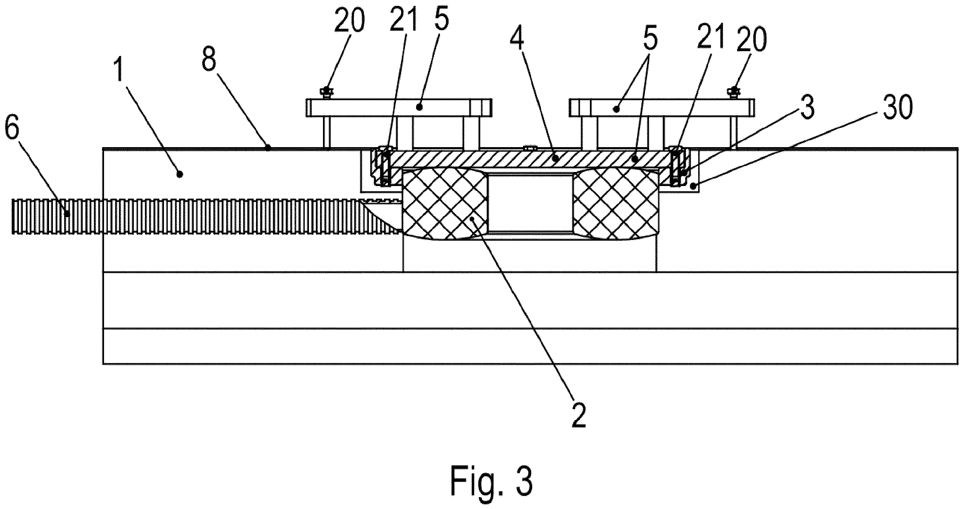

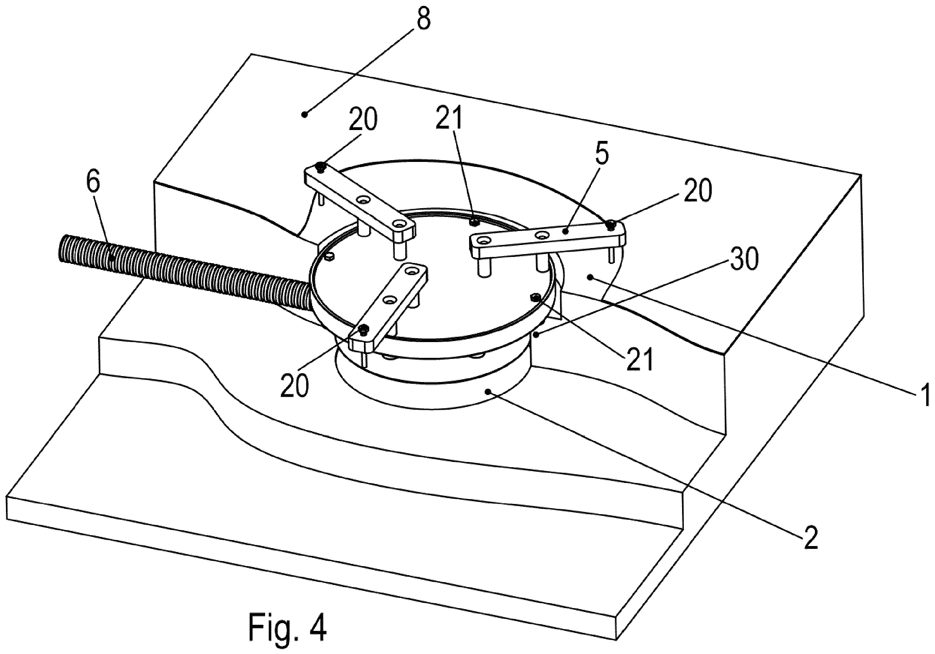

Wie in Figur 1 bis 4 gezeigt, wird ein Dichtkörper 2 in den unteren Bereich der Stufenbohrung eingebracht, welcher in axialer Richtung, also in Richtung der Bohrungsachse der Stufenbohrung, den vom Mündungsbereich axial überdeckten Bereich überdeckt. Außerdem erstreckt sich der Dichtkörper 2 axial bis in den vom Ringrahmen 3 axial überdeckten Bereich. Somit ist der zwischen der Stufe 7 und dem ringrahmen 3 vorhandene Spaltbereich überdeckt und es ist Vergussmasse 30 in diesen Spaltbereich einfüllbar. Der Spaltbereich erstreckt sich radial zwischen Boden 1 und Ringrahmen 3 und axial bis zur Stufe 7. Sowohl in radialer Richtung als auch in axialer Richtung ist der Ringrahmen 3 vom Boden 1, insbesondere von der Wandung der Stufenbohrung, beabstandet.

Da der Ringrahmen 3 vom Ausgleichsmittel, also der Scheibe 4, gehalten ist, insbesondere mittels Verbindungsschrauben 21, ist in den den Ringrahmen 3 umgebenden Spalt Vergussmasse 30 einfüllbar. Das Vordringen der Vergussmasse 30 in den Bereich der Stufenbohrung ist verhindert mittels des Dichtkörpers 2.

Somit ist nach Aushärten der Vergussmasse 30 das Ausgleichsmittel, insbesondere die Scheibe 4 mit Armen 5, entfernbar. Der Ringrahmen 3 ist somit mittels der Vergussmasse 30 stoffschlüssig gehalten und daher mit dem Boden 1 verbunden.

Der Dichtkörper 2 weist ein mittig angeordnetes axial durchgehendes Loch auf, so dass er mit einem Finger in einfacher Weise aus dem Bereich der Stufenbohrung entnehmbar ist.

Der Dichtkörper 2 ist aus einem Schaumstoff, insbesondere Kunststoff, gefertigt, insbesondere torusförmig. Alternativ ist der Dichtkörper 2 hohl und mit einer die Oberfläche bildenden Haut aus Gummi oder Kunststoff ausgeführt, wobei er mit Druckluft aufblasbar ist und sich beim Aufblasen an die axial unterhalb der Stufe 7 der Stufenbohrung liegende Wandung der Stufenbohrung anschmiegt sowie den Spalt begrenzend auch am Ringrahmen 3 anliegt. Nach Einfüllen der Vergussmasse 30 wird dann die Luft aus dem Dichtkörper 2 herausgelassen.

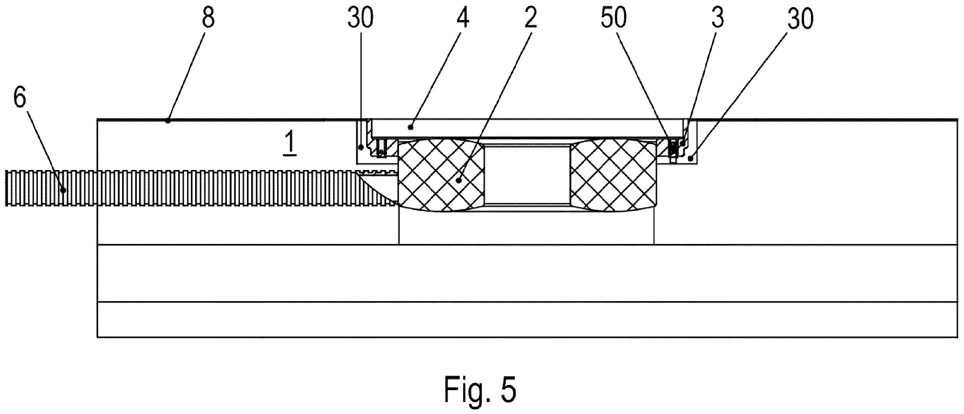

In Figur 5 ist eine zur Ausführung nach Figuren 1 bis 4 alternative Ausrichtung des Ringrahmens 3 an der Stufenbohrung gezeigt.

Dabei weist der Ringrahmen 3 an seinem Umfang axial gerichtete Gewindebohrungen auf, in welche Gewindestifte 50 einschraubbar sind, so dass diese ein Abstützen des Ringrahmens 3 an der Stufe 7 der Stufenbohrung ermöglichen.

Somit ist durch ein Anpassen mittels Schrauben der Gewindestifte 50 die Position des Ringrahmens 3 bestimmbar, insbesondere die Höhe des Ringrahmens 3. Der axial obere Randbereich des Ringrahmens 3 wird dabei wie bei der Ausführung nach Figur 1 bis 4 auf die Höhe des Bodenbelags 8 gebracht, so dass spätestens nach dem Ausbessern oder Aufbringen des Bodenbelags 8 der Ringrahmen 3 in der vorgesehenen Höhe angeordnet ist.

Danach wird auch bei der Ausführung nach Figur 5 die Vergussmasse 30 eingebracht. Die Gewindestifte 50 verbleiben dabei in der Vergussmasse 30.

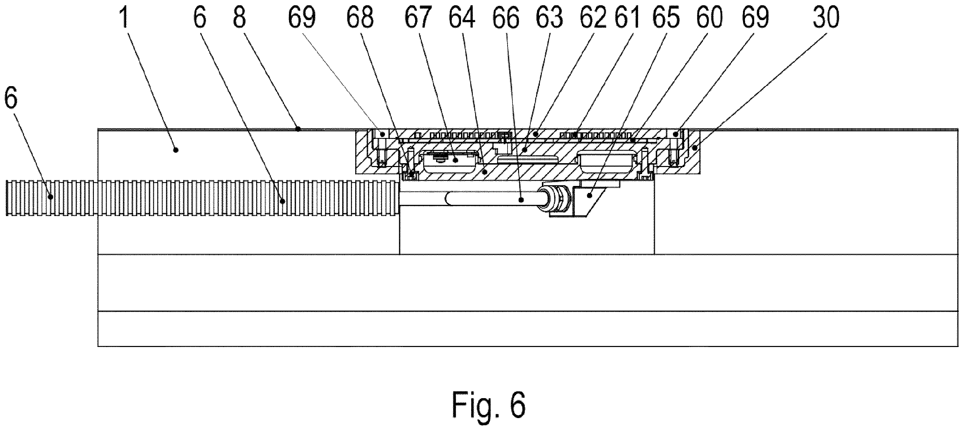

In der Figur 6 ist der nach dem Aushärten der Vergussmasse 30 und Entfernen des Dichtkörpers 2 herzustellende Ladepunkt im Querschnitt gezeigt.

Dabei ist eine spiralförmige Rechteckwicklung 61 in einer entsprechend spiralförmig rechteckig verlaufende Nut aufgenommen, welche an der Unterseite eines Deckelteil 62 angeordnet ist. Das Deckelteil 62 fungiert als Wicklungsträger für die Wicklung 61.

Das Deckelteil 62 weist einen kreisförmigen, also kreiszylindrischen Außenumfang auf.

Das Deckelteil 62 ist mit einem Aufnahmeteil 63 verbunden. Dabei ist im Aufnahmeteil 63 eine Ferritschicht 60 aufgenommen, welche einen kreisplattenartigen, also kreiszylindrischen Raumbereich im Wesentlichen füllt, wobei die Ferritschicht vorzugsweise aus kleinen, nebeneinander angeordneten, quaderförmigen Ferritteilen zusammengesetzt ist.

Die Ferritschicht 60 ist also zwischen dem Deckelteil 62 und dem Aufnahmeteil 63 angeordnet. Der von der Ferritschicht 60 befüllte Raumbereich ist von dem Deckelteil 62 und dem Aufnahmeteil 63 begrenzt.

Das Aufnahmeteil 63 ist mittels durch das Deckelteil 62 und durch das Aufnahmeteil 63 durchgehenden Schrauben 69 mit dem Rahmenteil 3 schraubverbunden. Hierzu weist das Rahmenteil 3 entsprechend axial gerichtete Gewindebohrungen auf, in welche die Schrauben 69 zumindest teilweise eingeschraubt sind.

Die Unterseite des Aufnahmeteils 63, also die vom Deckelteil 62 abgewandte Seite des Aufnahmeteils 63, ist mittels eines Unterteils 64, insbesondere Unterdeckteil, abgedeckt. Hierbei ist zwischen Aufnahmeteil 63 und Unterteil 64 ein ringförmiger Raumbereich ausgebildet, in welchem eine Leiterplatte 67 angeordnet ist. Der ringförmige Raumbereich ist in Umfangsrichtung umlaufend ausgeführt, also ohne Unterbrechung in Umfangsrichtung.

Auf der Leiterplatte 67 sind Kondensatoren bestückt, welche mit der Wicklung 61 parallel oder in Reihe geschaltet sind. Die Resonanzfrequenz des so entstandenen Schwingkreises entspricht der Frequenz des von einem Einspeisegerät in die Wicklung eingeprägten Stromes.

Die Zuführung des Stromes von dem in den Figuren nicht gezeigten Einspeisegerät erfolgt über eine Leitung 66, also Kabel, welche durch das Leerrohr 6 und durch eine Kabelverschraubung 65 geführt sind zur Leiterplatte 67. Das Gehäuse der Kabelverschraubung 65 ist an der Unterseite des Unterteils 64, also an der vom Aufnahmeteil 63 abgewandten Seite des Unterteils 64 angeordnet.

Mittig angeordnet ist zwischen Aufnahmeteil 63 und Unterteil 64 ein weiterer Raumbereich, in welchem ein steuerbares Leuchtmittel vorsehbar ist. Somit ist es ermöglicht, Information durch das Leuchtmittel anzuzeigen, wobei hierzu eine axial durch das Aufnahmeteil durchgehende Bohrung vorzunehmen ist, und das deckelteil entweder aus einem transparenten Kunststoff gefertigt ist oder ein über der Bohrung angeordneter Bereich des Deckelteils ist aus einem transparenten Stoff gefertigt. Die Bohrung ist vorzugsweise befüllt mit einem transparenten Stoff. Das Leuchtmittel ist derart steuerbar, dass das Leuchtmittel anschaltbar oder ausschaltbar ist und/oder dass die Farbe des Leuchtmittels steuerbar ist. Auf diese Weise sind verschiedene Betriebszustände oder auch andere Informationen anzeigbar.

Bei einem anderen erfindungsgemäßen Ausführungsbeispiel ist die Wicklung 61 als flache Ringwicklung ausgeführt. Dabei ist die Ringwicklung kreisspiralförmig ausgeführt. Auf diese Weise ist das Mobilteil während der Übertragung von Energie auf dem Ladepunkt drehbar, ohne dass die induktive Kopplung zwischen der Wicklung 61 und der am Mobilteil angeordneten, vorzugsweise ebenfalls als flache kreisspiralförmige Ringwicklung ausgeführte Sekundärwicklung schwankt. Somit ist die Zeit der Änderung des Lenkwinkels eines Mobilteils mit Panzerantrieb oder anderem omnidirektionalem Antrieb nutzbar für eine induktive Übertragung von Energie an das Mobilteil.

Das Unterteil 64 ist mittels Schrauben 68 am Aufnahmeteil 63 angeschraubt.

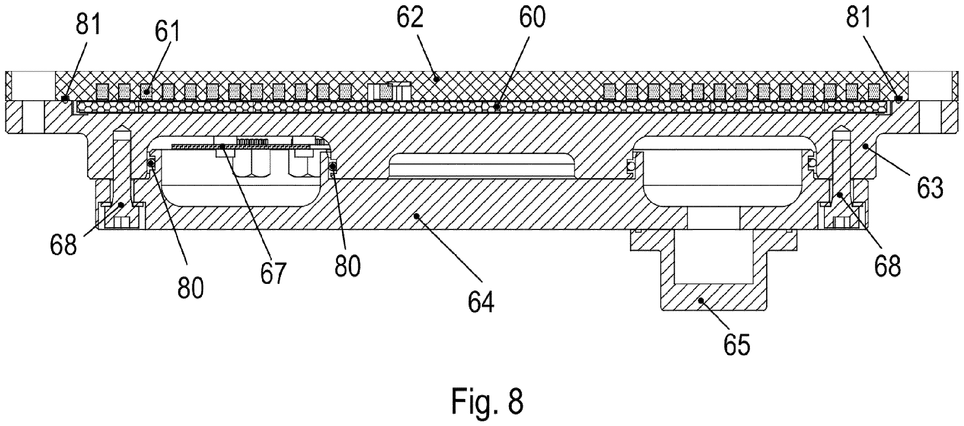

Wie in Figur 8 gezeigt, ist zwischen Deckelteil 62 und Aufnahmeteil 63 ist eine Dichtung 81 angeordnet, welche auf größerem Durchmesser als die Ferritschicht 60 und als die Wicklung 61 angeordnet ist. Die Dichtung 81 ist vorzugsweise als O-Ring ausgeführt.

Zwischen Unterteil 64 und Aufnahmeteil 63 ist ebenfalls eine Dichtung 80 angeordnet, welche den die Leiterplatte 67 aufnehmenden Raumbereich zur äußeren Umgebung hin abdichtet.

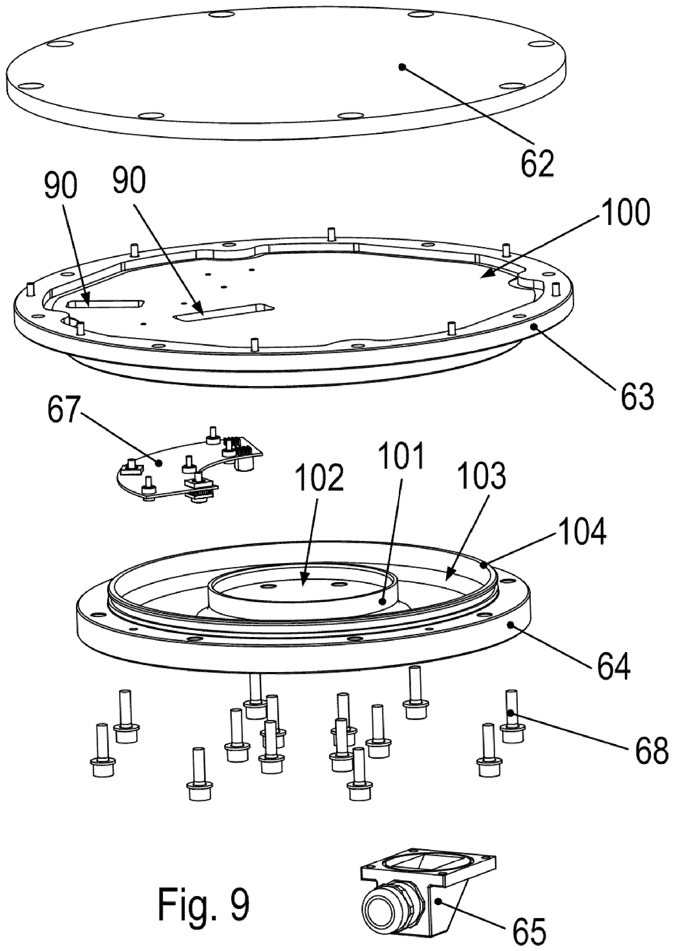

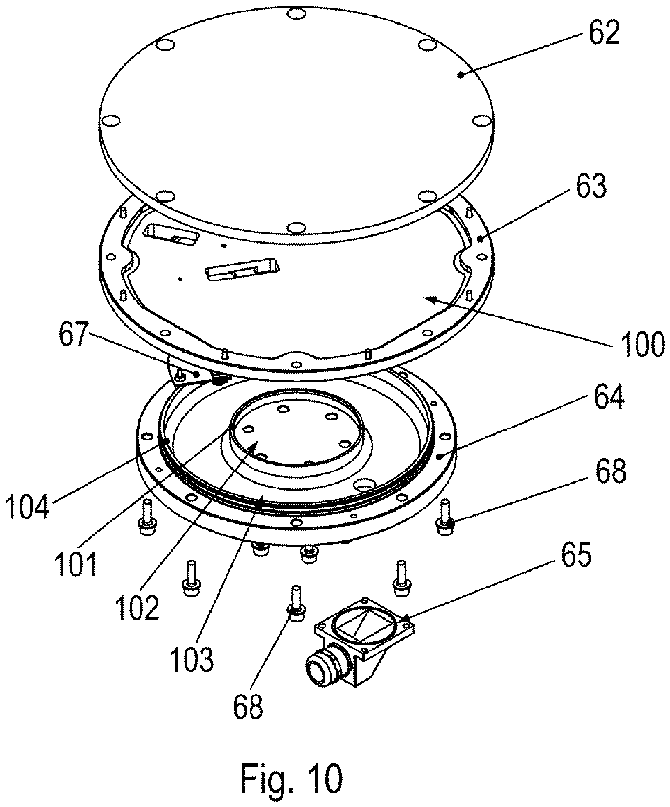

Wie in Figur 9 und Figur 10 gezeigt, ist die Ferritschicht 60 in einer am Aufnahmeteil 63 angeordneten Vertiefung 100 angeordnet. Diese Vertiefung 100 ist dabei an der Oberseite, also an der dem Deckelteil 62 zugewandten Seite, des Aufnahmeteils 63 angeordnet.

Das Aufnahmeteile 63 weist zwei voneinander beabstandete axial durchgehende Ausnehmungen 90 auf, so dass Anschlussleitungen, wie Zuleitung 66, zur Leiterplatte 67 durchführbar sind.

Die Ausnehmungen 63 münden an der Oberseite des Aufnahmeteils 63 in die Vertiefung 100.

Das Unterteil 64 weist eine in Umfangsrichtung umlaufende Ringwand 101 auf, welche den mittig zwischen Unterteil 64 und Aufnahmeteil 63 angeordneten Raumbereich begrenzt.

Außerdem weist das Unterteil 64 eine weitere in Umfangsrichtung umlaufende Ringwand 104 auf, welche radial beabstandet ist von der Ringwand 101. Somit ist der die Leiterplatte 67 aufnehmende Raumbereich begrenzt durch die Ringwand 101 und die Ringwand 104.

Das Unterteil 64 ist mittels Schrauben 68 mit dem Aufnahmeteil 63 schraubverbunden, wobei das Aufnahmeteil 63 hierzu axial gerichtete Gewindebohrungen aufweist.

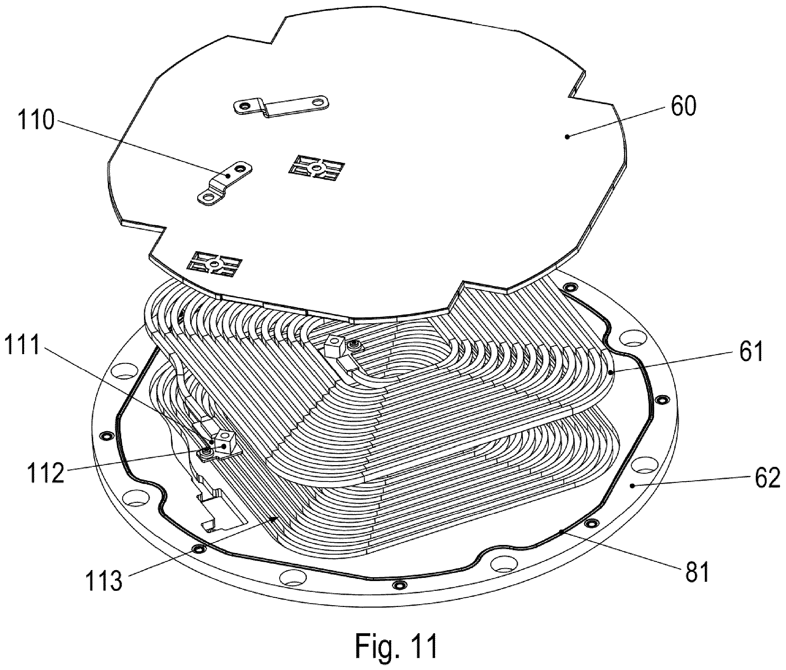

Wie in Figur 11 gezeigt, weist das Deckelteil 62 an seiner dem Aufnahmeteil 63 zugewandten Seite, also Unterseite, die rechteck-spiralförmig verlaufende Nut 113 auf, in welche die Wicklung 61 eingelegt wird.

Die Wicklungsdrahtenden der als Flachwicklung ausgeführten Wicklung 61 sind zu Adapterplatinen 111 herausgeführt, auf denen jeweils ein elektrisches Anschlussteil 112 bestückt ist. Somit ist eine elektrische Verbindung in einfacher Weise bereitgestellt. Die Adapterplatinen 111, also Leiterplatten, sind schraubverbunden und somit elektrisch verbunden mit Stromschienen 110, welche elektrisch mit Leiterbahnen der Leiterplatte 67 verbunden sind.

Die Stromschienen 110 sind auf der vom Deckelteil 60 abgewandten Seite der Ferritschicht angeordnet.

Die Dichtung 81 ist vorzugsweise als Schaumdichtung ausführbar.

Die am Unterteil 64 ausgeformten Ringwände 101 und 104 sind auf der dem Aufnahmeteil 63 zugewandten Seite des Unterteils 64 angeordnet. Die Ringwände 101 und 104 berühren die das Aufnahmeteil 63, so dass radial zwischen ihnen der ringförmige Raumbereich ausgebildet ist, in welchem die Leiterplatte 67 angeordnet ist.

### Bezugszeichenliste

1 Boden, insbesondere Beton
2 Dichtkörper
3 Ringrahmen
4 Scheibe, insbesondere Kreisscheibe
5 Arm
6 Leerrohr
7 Stufe der Stufenbohrung
8 Bodenbelag
20 Einstellschraube
21 Verbindungsschraube
30 Vergussmasse
50 Gewindestift
60 Ferritschicht
61 Wicklung, insbesondere Rechteckwicklung
62 Deckelteil als Wicklungsträger
63 Aufnahmeteil
64 Unterteil, insbesondere Unterdeckteil
65 Gehäuse der Kabelverschraubung
66 Zuleitung
67 Leiterplatte
68 Schraube
69 Schraube
80 Dichtung
81 Dichtung
90 Ausnehmung
100 Vertiefung
101 Ringwand
102 Vertiefung
103 Vertiefung
104 Ringwand
110 Stromschiene
111 Adapterplatine
112 elektrisches Anschlussteil
113 Nut, insbesondere rechteckwicklungsförmig verlaufende Nut

## Patentansprüche

1. Verfahren zum Herstellen eines Systems zur induktiven Übertragung von **Energie von einem am Boden angeordneten Primärteil an ein auf dem Boden bewegbares** Mobilteil,
**dadurch gekennzeichnet, dass**
in einem ersten Verfahrensschritt in einen Boden (1) eine Stufenbohrung eingebracht wird,
wobei in einem nachfolgenden zweiten Verfahrensschritt ein Dichtkörper (2) in die Stufenbohrung eingebracht wird,
wobei in einem nachfolgenden dritten Verfahrensschritt ein Ringrahmen (3) mittels einer an der Oberfläche des Bodens (1) abgestützten Ausrichteinheit in der Stufenbohrung gehalten wird, insbesondere wobei die Oberkante des Ringrahmens (3) auf die Höhe des Bodens (1) oder auf die Oberfläche eines auf dem Boden (1) angebrachten Bodenbelags (8) ausgerichtet ist, insbesondere also die Oberkante auf gleicher Höhenposition gebracht wird wie die Oberfläche des Bodens (1) oder des Bodenbelags (8),
wobei der Ringrahmen (3) vom Boden (1) beabstandet ist, so dass ein Spaltbereich zwischen Ringrahmen (3) und Boden (1) vorhanden ist,
wobei in einem nachfolgenden vierten Verfahrensschritt Vergussmasse (30) in den Spaltbereich gefüllt wird,
wobei in einem nachfolgenden fünften Verfahrensschritt die Ausrichteinheit entfernt wird,
wobei in einem nachfolgenden sechsten Verfahrensschritt ein Primärteil im Ringrahmen (3) aufgenommen wird, insbesondere schraubverbunden wird.

2. Verfahren nach Anspruch 1,
**dadurch gekennzeichnet, dass**
der Dichtkörper (2) an der Stufenbohrung, insbesondere an einem unterhalb der Stufe (7) der Stufenbohrung angeordneten Bereich der Stufenbohrung anliegt, insbesondere angedrückt ist, und an dem Ringrahmen (3), insbesondere an der Innenwand des ringförmigen Ringrahmens (3).

3. Verfahren nach mindestens einem der vorangegangenen Ansprüche,
**dadurch gekennzeichnet, dass**
das Primärteil eine Wicklung (61) aufweist,
insbesondere wobei eine elektrische Zuleitung (66) für die Wicklung (61) in einem Leerrohr (6) angeordnet ist, welches in den unterhalb der Stufe (7) der Stufenbohrung angeordneten Bereich mündet,
und/oder dass
die Ausrichteinheit an der Oberfläche des Bodenbelags (8) des Bodens (1) ausgerichtet wird,
und/oder dass
Ringrahmen (3) oberhalb der Stufe (7) der Stufenbohrung angeordnet ist.

## Claims

1. A method of producing a system for the inductive transmission of energy from a primary part arranged at the floor to a mobile part movable on the floor,
**characterised in that**
a stepped bore is made in a floor (1) in a first method step,
wherein a sealing body (2) is inserted into the stepped bore in a subsequent second method step,
wherein an annular frame (3) is held in the stepped bore by means of an alignment unit, supported on the surface of the floor (1), in a subsequent third method step, in particular wherein the upper edge of the annular frame (3) is aligned level with the floor (1) or with the surface of a floor covering (8) attached to the floor (1), in particular therefore the upper edge is brought to the same vertical position as the surface of the floor (1) or of the floor covering (8), wherein the annular frame (3) is spaced apart from the floor (1), so that a gap region is present between annular frame (3) and floor (1),
wherein the gap region is filled with sealing compound (30) in a subsequent fourth method step, wherein the alignment unit is removed in a subsequent fifth method step,
wherein a primary part is received in the annular frame (3) in a subsequent sixth method step, in particular is screw-connected.

2. A method according to claim 1,
**characterised in that**
the sealing body (2) rests against the stepped bore, in particular against a region, arranged below the step (7) of the stepped bore, of the stepped bore, in particular is pressed thereagainst, and against the annular frame (3), in particular against the inner wall of the ringshaped annular frame (3).

3. A method according to at least one of the preceding claims,
**characterised in that**
the primary part has a winding (61),
in particular wherein an electrical feed line (66) for the winding (61) is arranged in an empty pipe (6) which issues into the region located below the step (7) of the stepped bore,
and/or **in that**
the alignment unit is aligned with the surface of the floor covering (8) of the floor (1)
and/or **in that**
annular frame (3) is arranged above the step (7) of the stepped bore.

## Revendications

1. Procédé de production d'un système dévolu à la transmission d'énergie, par induction, d'une partie primaire implantée au sol à une partie mobile apte à se mouvoir sur ledit sol,
**caractérisé par le fait**
**qu'**un perçage étagé est pratiqué dans un sol (1) lors d'une première étape opératoire, sachant que, lors d'une deuxième étape opératoire successive, un corps d'étanchement (2) est inséré dans ledit perçage étagé,
sachant que, lors d'une troisième étape opératoire successive, un cadre annulaire (3) est retenu dans ledit perçage étagé au moyen d'une unité d'alignement prenant appui à la surface du sol (1), sachant notamment que l'arête supérieure dudit cadre annulaire (3) est alignée avec la hauteur du sol (1) ou avec la surface d'un revêtement (8) mis en place sur ledit sol (1), c'est-à-dire, en particulier, que ladite arête supérieure est amenée à un même emplacement en hauteur que ladite surface du sol (1), ou du revêtement (8) dudit sol,
ledit cadre annulaire (3) étant situé à distance du sol (1), de manière qu'une zone de clivage soit présente entre ledit cadre annulaire (3) et ledit sol (1),
sachant que, lors d'une quatrième étape opératoire successive, de la masse de scellement (30) est déversée dans ladite zone de clivage,
sachant que ladite unité d'alignement est enlevée lors d'une cinquième étape opératoire successive,
sachant que, lors d'une sixième étape opératoire successive, une partie primaire est logée dans le cadre annulaire (3) en étant notamment reliée par vissage.

2. Procédé selon la revendication 1,
**caractérisé par le fait que**
le corps d'étanchement (2) est en applique, en particulier par pression, contre le perçage étagé et notamment au niveau d'une région du perçage étagé située au-dessous du gradin (7) dudit perçage étagé, et contre le cadre annulaire (3), en particulier contre la paroi intérieure dudit cadre annulaire (3).

3. Procédé selon au moins l'une des revendications précédentes,
**caractérisé par le fait que**
la partie primaire est munie d'un bobinage (61),
sachant notamment qu'une ligne (66) d'alimentation électrique, dédiée audit bobinage (61), est logée dans un tube vide (6) qui débouche dans la région située au-dessous du gradin (7) du perçage étagé ;
et/ou **par le fait que**
l'unité d'alignement est orientée au niveau de la surface du revêtement (8) du sol (1) ; et/ou **par le fait que**
le cadre annulaire (3) est disposé au-dessus dudit gradin (7) du perçage étagé.
